(19) Europäisches Patentamt
European Patent Office
Office européen des brevets

(11) **EP 3 063 969 B1**

(12) **EUROPEAN PATENT SPECIFICATION**

(45) Date of publication and mention
of the grant of the patent:
**30.01.2019 Bulletin 2019/05**

(51) Int Cl.:
*H04W 8/22* *(2009.01)*     *H04L 12/803* *(2013.01)*
*H04W 28/02* *(2009.01)*     *H04L 12/835* *(2013.01)*

(21) Application number: **15733312.1**

(22) Date of filing: **02.03.2015**

(86) International application number:
**PCT/CN2015/073503**

(87) International publication number:
**WO 2015/101363 (09.07.2015 Gazette 2015/27)**

(54) **SYSTEM AND METHOD FOR TRAFFIC ENGINEERING USING LINK BUFFER STATUS**

SYSTEM UND VERFAHREN FÜR VERKEHRSMANIPULATION UNTER VERWENDUNG EINES VERBINDUNGSPUFFERSTATUS

SYSTÈME ET PROCÉDÉ POUR INGÉNIERIE DE TRAFIC AU MOYEN D'UN STATUT DE TAMPON DE LIAISON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.01.2014 US 201414146482**

(43) Date of publication of application:
**07.09.2016 Bulletin 2016/36**

(73) Proprietor: **Huawei Technologies Co., Ltd.
Longgang District
Shenzhen, Guangdong 518129 (CN)**

(72) Inventors:
• **FARMANBAR, Hamidreza
Ottawa, Ontario K2M 0E1 (CA)**
• **ZHANG, Hang
Nepean, Ontario K2G 5Z1 (CA)**

(74) Representative: **Körber, Martin Hans
Mitscherlich PartmbB
Patent- und Rechtsanwälte
Sonnenstrasse 33
80331 München (DE)**

(56) References cited:
WO-A1-2012/154998     WO-A1-2013/143474
CN-A- 101 742 366     CN-A- 103 068 002
JP-A- 2013 058 895     US-A1- 2003 158 965
US-A1- 2005 237 973     US-A1- 2006 159 084
US-A1- 2012 182 864

## Description

TECHNICAL FIELD

The present invention relates to the field of network communications, and, in particular embodiments, to a system and method for traffic engineering using link buffer status.

BACKGROUND

In communications systems, traffic engineering (TE) techniques are used to optimize routing of traffic through network nodes according to network status and conditions. The TE techniques are used to improve network performance, such as by improving traffic routing distribution across network nodes and paths and hence improving resource usage. The TE techniques include calculating cost of routes (paths and nodes) and selecting appropriate routes for traffic accordingly. The nodes in a network may include buffers for buffering data, e.g., temporary buffering data before forwarding. Typically, transmit buffers (also referred to as link buffers) in the nodes suffer from build-ups of data in the buffers, for example due to channel transients or unpredicted demand change. The buffer build-ups slow data forwarding and can cause traffic congestion in the network. For services with stringent quality of service (QoS) or user quality of experience (QoE) requirements, it is necessary for data stored in link buffers to be delivered on time (without substantial delays), such as in real-time traffic services and applications . Typically, a TE engine in the network uses link buffer status from the nodes to route more traffic through nodes with less buffered data (small used buffer size) and less traffic through nodes with less buffered data (large used buffer size). However, such routing is applied on single path basis where optimization is per each path individually, which can cause buffer build-ups on other links.

US Patent Application Publication No. 2006/0159084 teaches methods of routing control in wired networks using Multiprotocol Label Switching, MPLS. There is a need for an improved and efficient method for TE using link buffer status.

SUMMARY OF THE INVENTION

In accordance with a first aspect of the present invention, a method by a network component for traffic engineering (TE) using link buffer status includes obtaining a plurality of inputs from nodes in a network. The plurality of inputs include wired link capacities for wired links in the network, wireless link spectral efficiencies, SEs, for wireless links in the network, and wireless access node resources. The method further includes obtaining buffer status of the wired and wireless links, and reserving capacity and resources for the wired and wireless links according to the buffer status. At least one of the plurality of inputs are then modified to account for the reserved capacity and resources. The modified inputs and unmodified inputs of the plurality of inputs are provided to a TE engine which processes the modified inputs and the unmodified inputs according to a TE algorithm to determine traffic splitting at at least one of the nodes, the wired links, and the wireless links.

In accordance with a second aspect of the present invention, a network component for TE using link buffer status includes at least one processor and a non-transitory computer readable storage medium storing programming for execution by the at least one processor. The programming includes instructions that when executed by the at least one processor cause the at least one processor to obtain a plurality of inputs from nodes of a network. The inputs include wired link capacities for wired links in the network, wireless link spectral efficiencies, SEs, for wireless links in the network, and wireless access node resources. The programming includes further instructions that when executed by the at least one processor cause the at least one processor to obtain buffer status of the wired and wireless links, and reserve capacity and resources for the wired and wireless links according to the buffer status. The network component is further configured to modify at least one of the plurality of inputs to account for the reserved capacity and resources. The modified inputs and unmodified inputs of the plurality of inputs are provided to a TE engine which processes the modified inputs and the unmodified inputs according to a TE algorithm to determine traffic splitting at at least one of the nodes, the wired links and the wireless links.

The foregoing has outlined rather broadly the features of an embodiment of the present invention in order that the detailed description of the invention that follows may be better understood. Additional features and advantages of embodiments of the invention will be described hereinafter, which form the subject of the claims of the invention. It should be appreciated by those skilled in the art that the conception and specific embodiments disclosed may be readily utilized as a basis for modifying or designing other structures or processes for carrying out the same purposes of the present invention. It should also be realized by those skilled in the art that such equivalent constructions do not depart from the scope of the invention as set forth in the appended claims.

BRIEF DESCRIPTION OF THE DRAWINGS

For a more complete understanding of the present invention, and the advantages thereof, reference is now made to the following descriptions taken in conjunction with the accompanying drawing, in which:

Figure 1 illustrates a scenario of a network with link buffers;

Figure 2 illustrates an embodiment of a system for traffic engineering (TE) using link buffer status;

Figure 3 illustrates an embodiment of a method for TE using buffer status; and

Figure 4 is a diagram of a processing system that can be used to implement various embodiments.

Corresponding numerals and symbols in the different figures generally refer to corresponding parts unless otherwise indicated. The figures are drawn to clearly illustrate the relevant aspects of the embodiments and are not necessarily drawn to scale.

DETAILED DESCRIPTION OF ILLUSTRATIVE EMBODIMENTS

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

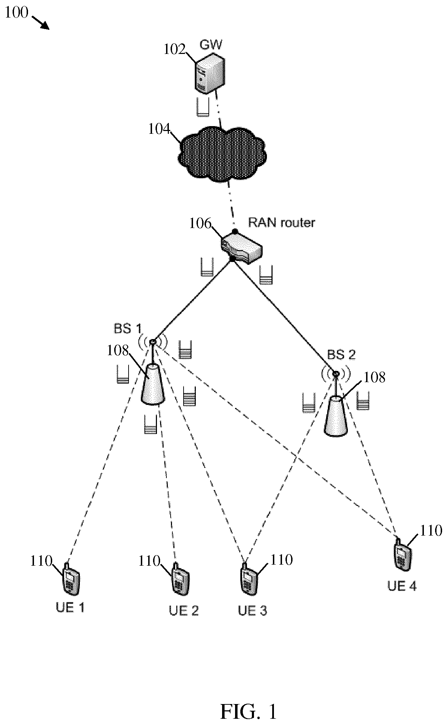

Figure 1 illustrates a scenario of a network 100 with link buffers at the various nodes. The network 100 includes a gateway 102 for user traffic, a router 106 that routes the traffic form and to the gateway 102, a backbone or access network 104 connecting the gateway 102 with the router 106, and one or more base stations 108 (labeled BS1 and BS2) connected to the router 106. The base stations 108 communicate the traffic on wireless links to corresponding user equipments (UEs) or device 110. The nodes (gateway 102, router 106, base stations 108) of the network 100 include buffers (referred to as link buffers) for temporary buffering or queuing traffic data before transmission. Typical TE routing is aware of traffic loads at such nodes and reroutes traffic form nodes with heavy load to nodes with light loads, considering each single path at a time. Such routing can cause buffer build-ups on other links of the network.

Embodiments are provided herein for implementing TE using link buffer status to avoid such issues. Specifically, the link buffer status for each link is used to identify links with buffer build-ups. One or more of the capacity parameters (for different resources) at the links with buffer build-ups are then reserved. This is achieved by modifying the capacity/resource input parameters to the TE model according to the level of build-ups in the link buffers, as reflected by the buffer status information from the links or nodes. The reserved capacity/resource, in the form of modified input capacity parameters, is then fed to the TE engine to calculate the routing of traffic across all links and paths. As such, the reserved capacity is used to modify the input (as described below) in the TE routing technique to route the traffic accordingly, leading to the depletion of link buffers with build-ups at all or multiple considered paths at the same time. Since this multiple-path TE routing approach optimizes the routing of traffic across all or multiple considered paths simultaneously, the build-ups at light load links or nodes is avoided or reduced (in comparison to other TE techniques).

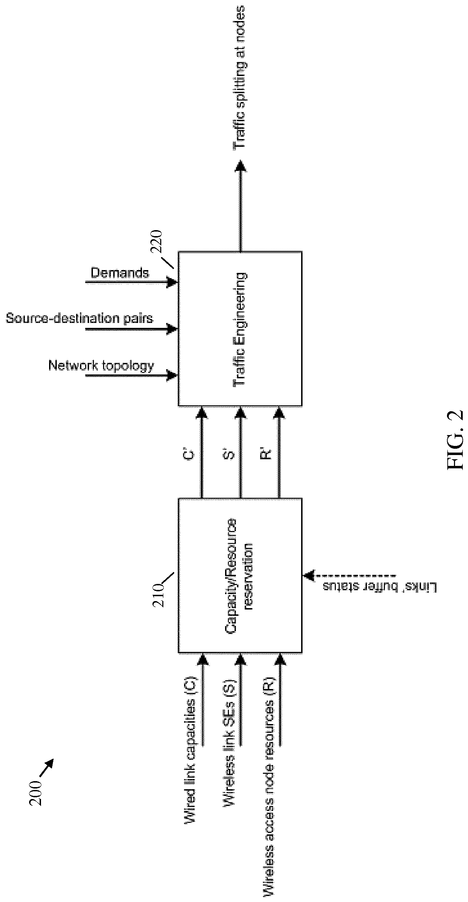

Figure 2 shows an embodiment of a system 200 for TE using link buffer status. The system 200 includes a capacity/resource reservation engine 210 and a TE engine 220. The engines can be functions implemented via software, hardware (e.g., servers or other network components), or combinations of both. The capacity/resource engine 210 receives inputs about the capacities/resources of the links and nodes in a network, such as the network 100. The capacity inputs can include wired link capacities (C), e.g., for the links between the nodes of the network 100 (gateway102, router 106, base stations 108). The inputs also include wireless link spectral efficiencies (SEs), e.g., for the wireless links between the base stations 108 and UEs 110, and wireless access node resources (R), such as bandwidth and other resources at the base stations 108. Additionally, the capacity/resource reservation engine 210 receives the buffer status of the links in the network, which indicates the used buffer sizes at the nodes on each of the considered links. The capacity/resource reservation engine 210 modifies (changes the value of) one or more of the capacity inputs (C, S, R) to reserve some of the capacity/resource according to the links' buffer status. For instance, reserved capacity/resource is calculated using links' buffer status information as shown below. The initial capacity input values (C, S, R) are then reduced by the calculated reserved capacity/resource to obtain corresponding updated input values (C', S', R'). In different implementations, e.g., according to demand and optimization target, only one of the input values, only some of the input values, or all of the input values are modified or reduced to account for the reserved capacity/resource.

After reserving the capacity/resource according to the links' buffer status, the outputs (C', S', R') from the capacity/resource reservation engine 210 are sent as inputs to the TE engine 220 which processes the inputs according to available or current TE models/solutions. The TE engine 220 also receives other parameters, including network topology information, source-destination pairs for the traffic, and demands (requirements) in terms of resources, service, user, or others. These additional parameters may be additional inputs and condition parameters for the TE problem. The TE engine 220 processes the inputs and parameters and provides the routing results, which determines traffic splitting at nodes and links (traffic distribution onto paths). Since the inputs to the TE engine 220 and not the TE engine's algorithm are modified in the system 200, the system 200 is compatible with current TE systems. The modification to such TE systems would require adding the capacity/resource reservation engine 210 without changing the existing TE mechanism or engine. Other implementations can incorporate both the capacity/resource reservation engine 210 with the TE engine 220 as a single component or algorithm.

In an embodiment, the wired link capacities, C, obtained from the network can be modified into C' by subtracting a reserved capacity, $C_l$, for each wired link, which is calculated based on links' buffer status. The links' buffer status indicates the number of bits, $b_l$, in each considered buffer and the buffer depletion time, $t_l$, for each corresponding wired link 1. Thus, the reserved capacity, $C_l$, is obtained as $C_l = {}^{b_l}/_{t_l}$ , and C' =C-$C_l$ considering the reserved capacity for each wired link. Additionally or alternatively, the wireless access node resources, R, obtained from the network can be modified into R' by subtracting a reserved resource, $R^n$, for each considered wireless access node n according to the links' buffer status. The links' buffer status indicates the number of bits, $b_l^n$, in the buffer for wireless link 1 at wireless access node n, the spectral efficiency $s_l^n$ of wireless link 1 and wireless access node n, and the buffer depletion time $t^n$ for wireless access node n. Thus, the reserved resource, $R^n$, is obtained as $R^N = {}^1/_{t^n} \sum_l {}^{b_l^n}/_{s_l^n}$, and R'=R-$R^n$ considering the reserved resource of wireless links for each considered wireless access node. The wireless link SEs, S, can also be modified into S' by reserving an amount of spectral efficiency for each considered wireless link. Any of the inputs can be modified or kept unchanged according to demand and requirements.

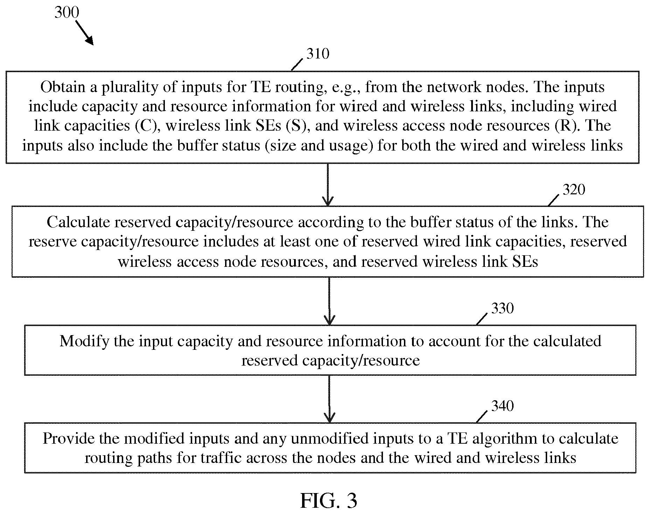

Figure 3 shows an embodiment of a method 300 for TE using buffer status. The method 300 can be implemented using the system 200, e.g., in a network with wireless links such as the network 100. At step 310, a plurality of inputs for TE routing are obtained, e.g., from the network nodes. The inputs include capacity and resource information for wired and wireless links, including wired link capacities (C), wireless link SEs (S), and wireless access node resources (R). The inputs also include the buffer status, such as buffer size and usage, for both the wired and wireless links. At step 320, reserved capacity/resource is calculated according to the buffer status of the links. The reserve capacity/resource includes at least one of reserved wired link capacities, reserved wireless access node resources, and reserved wireless link SEs. At step 330, the input capacity and resource information are modified to account for the calculated reserved capacity/resource. For instance, the reserved wired link capacities are subtracted from the wired link capacities, C, to obtain a corresponding modified input C'. Additionally or alternatively, the reserved wireless access node resources are subtracted from the wireless access node resources, R, to obtain a corresponding modified input R'. Additionally or alternatively, the reserved wireless link SEs are subtracted from the wireless link SEs, S, to obtain a corresponding modified input S'. In the case of maintaining an input without change, the modified value can be set to the initial value, e.g., C' = C, S' =S, or R' = R. At step 340, the modified inputs and any unmodified inputs are provided to a TE algorithm to calculate routing paths for traffic across the nodes and the wired and wireless links.

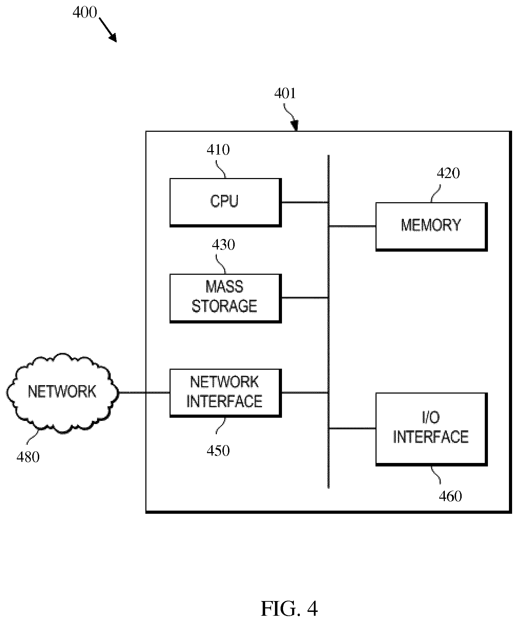

Figure 4 is a block diagram of an exemplary processing system 400 that can be used to implement various embodiments. Specific devices may utilize all of the components shown, or only a subset of the components and levels of integration may vary from device to device. Furthermore, a device may contain multiple instances of a component, such as multiple processing units, processors, memories, transmitters, receivers, etc. The processing system 400 may comprise a processing unit 401 equipped with one or more input/output devices, such as a network interfaces, storage interfaces, and the like. The processing unit 401 may include a central processing unit (CPU) 410, a memory 420, a mass storage device 430, and an I/O interface 460 connected to a bus. The bus may be one or more of any type of several bus architectures including a memory bus or memory controller, a peripheral bus or the like.

The CPU 410 may comprise any type of electronic data processor. The memory 420 may comprise any type of system memory such as static random access memory (SRAM), dynamic random access memory (DRAM), synchronous DRAM (SDRAM), read-only memory (ROM), a combination thereof, or the like. In an embodiment, the memory 420 may include ROM for use at boot-up, and DRAM for program and data storage for use while executing programs. In embodiments, the memory 420 is non-transitory. The mass storage device 430 may comprise any type of storage device configured to store data, programs, and other information and to make the data, programs, and other information accessible via the bus. The mass storage device 430 may comprise, for example, one or more of a solid state drive, hard disk drive, a magnetic disk drive, an optical disk drive, or the like.

The processing unit 401 also includes one or more network interfaces 450, which may comprise wired links, such as an Ethernet cable or the like, and wireless links to access nodes or one or more networks 480. The network interface 450 allows the processing unit 401 to communicate with remote units via the networks 480. For example, the network interface 450 may provide wireless communication via one or more transmitters/transmit antennas and one or more receivers/receive antennas. In an embodiment, the processing unit 401 is coupled to a local-area network or a wide-area network for data processing and communications with remote devices, such as other processing units, the Internet, remote storage facilities, or the like.

While several embodiments have been provided in the present disclosure, it should be understood that the disclosed systems and methods might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

In particular aspects of the present invention, there is provided a method for execution at a network component for traffic engineering using link buffer status, the method comprising:

obtaining a plurality of inputs for TE routing, wherein the inputs include capacity and resource information for wired and wireless links in a network;

obtaining buffer status of the wired and wireless links;

calculating reserved capacity and resource for the wired and wireless links according to the buffer status;

modifying the inputs for TE routing including the capacity and resource information according to the calculated reserved capacity and resource; and

calculating routing paths including at least some of the wired and wireless links according to the modified inputs for TE routing.

In an embodiment of this method, obtaining the inputs for TE routing includes obtaining a wired link capacity for each wired link in the network. In another embodiment,. calculating the reserved capacity and resource comprises calculating a reserved capacity according to the link buffer status for each wired link from a plurality of wired links in the network, and wherein modifying the inputs for TE routing includes subtracting the reserved capacity from the wired link capacity for each wired link and optionally the buffer status includes a number of bits in a buffer and a depletion time for the buffer for each wired link, and wherein calculating the reserved capacity according to the link buffer status for each wired link includes calculating a ratio of the number of bits to the depletion time. In another embodiment of this method, obtaining the inputs for TE routing includes obtaining a resource for each wireless access node and optionally includes calculating the reserved capacity and resource comprises calculating a reserved resource according to the link buffer status for each wireless access node from a plurality of wireless access nodes in the network, and wherein modifying the inputs for TE routing includes subtracting the reserved resource from the resource for each wireless access node. In a further optional embodiment, the buffer status includes a number of bits in a buffer for each wireless access node, a depletion time for the buffer, and a spectral efficiency for each wireless link of a set of wireless links for each wireless access node, and wherein calculating the reserved resource according to the link buffer status for each wireless access node includes: calculating a ratio of the number of bits to the spectral efficiency for each wireless link of the set of wireless links; calculating a sum of ratios for the wireless links; and dividing the sum of ratios for the wireless links by the depletion time for the buffer for each wireless access node.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein. The embodiments described above are meant to be illustrating examples only, the scope of the invention is defined by the attached claims.

## Claims

1. A method (300) executed by a network component for traffic engineering, TE, using link buffer status, the method comprising:

obtaining (310) a plurality of inputs from nodes in a network, wherein the inputs include wired link capacities for wired links in the network, wireless link spectral efficiencies, SEs, for wireless links in the network, and wireless access node resources;

obtaining buffer status (310) of the wired and wireless links;

reserving (320) capacity and resources for the wired and wireless links according to the buffer status;

modifying (330) at least one of the plurality of inputs to account for the reserved capacity and resources;

providing (340) the modified inputs and unmodified inputs of the plurality of inputs to a TE engine (220) which processes the modified inputs and the unmodified inputs according to a TE algorithm to determine traffic splitting at at least one of the nodes, the wired links, and the wireless links.

2. The method (300) of claim 1 wherein the providing (340) comprises: providing (340) the modified inputs and any unmodified inputs of the pluarity of inputs for TE routing to the TE engine (220) that calculates routing paths for traffic across the network including at least some of the nodes, the wired links, and wireless links.

3. The method (300) of claim 1, wherein the modifying (330) comprises: modifying (330) all of the plurality of inputs for TE engine routing to account for the reserved capacity and resource and the providing (340) comprises: providing (340) all of the modified inputs to the TE engine (220) which processes all the modified inputs according to the TE algorithm.

4. The method (300) of any one of claims 1 to 3, wherein the reserved capacity and resources includes at least one of reserved wired link capacities, reserved wireless access node resources, and reserved wireless link SEs.

5. The method (300) of claim 4, wherein modifying at least one of the plurality of inputs comprises at least one of reducing the wired link capacities by the reserved wired link capacities, reducing the wireless link SEs by the reserved wireless link SEs, and reducing the wireless access node resources by the reserved wireless access node resources.

6. The method (300) of any one of claims 1 to 5, wherein the buffer status of the wired and wireless links indicates size and usage of buffers at a plurality of nodes of the wired and wireless links.

7. A network component (401) for traffic engineering, TE, using link buffer status, the network component comprising:

> at least one processor (410) ; and
> a non-transitory computer readable storage medium (420, 430) storing programming for execution by the at least one processor (410), the programming including instructions that when executed by the at least one processor (410) cause the at least one processor (410) to:

> > obtain a plurality of inputs from nodes in a network, wherein the inputs include wired link capacities for wired links in a network, wireless link spectral efficiencies, SEs, for wireless links in the network, and wireless access node resources;
> > obtain buffer status of the wired and wireless links;
> > reserve capacity and resources for the wired and wireless links according to the buffer status; and
> > modify at least one of the plurality of inputs to account for the reserved capacity and resources; and

> provide the modified inputs and unmodified inputs of the plurality of inputs to a TE engine (220) which processes the modifed inputs and the unmodified inputs according to a TE algorithm to determine traffic splitting at at least one of the nodes, the wired links, and the wireless links.

8. The network component (401) of claim 7, wherein the programming further includes instructions that when executed by the at least one processor cause the at least one processor (410) to provide the modified inputs and unmodified inputs of the plurality of inputs for TE routing to the TE engine (220) that calculates routing paths for traffic accross the network including at least some of the nodes, the wired links, and wireless links.

9. The network component (401) of claim 7, wherein the programming further includes instructions that when executed by the at least one processor (410) cause the at least one processor (410) to modify all of the plurality of inputs for TE engine routing to account for the reserved capacity and resource and provide all of the modified inputs to the TE engine (220) which processes all of the modified inputs according to the TE algorithm.

10. The network component (401) of any one of claims 6 to 9, wherein the reserved capacity and resources includes at least one of reserved wired link capacities, reserved wireless access node resources, and reserved wireless link SEs.

11. The network component (401) of claim 10, wherein the instructions to modify at least one of the plurality of inputs include at least one of instructions that when executed by the at least one processor (401) cause the at least one processor (410) to reduce the wired link capacities by the reserved wired link capacities, reduce the wireless link SEs by the reserved wireless link SEs, and reduce the wireless access node resources by the reserved wireless access node resources.

12. The network component (401) of any one of claims 6 to 11, wherein the buffer status of the wired and wireless links indicates number of bits and depletion time of buffers at a plurality of nodes of the wired and wireless links.

**Patentansprüche**

1. Verfahren (300), das von einer Netzwerkkomponente ausgeführt wird, für Traffic Engineering, TE, unter Verwendung eines Verbindungspufferstatus, wobei das Verfahren aufweist:

> Erhalten (310) einer Mehrzahl von Eingaben von Knoten in einem Netzwerk, wobei die Eingaben Drahtverbindungskapazitäten für drahtgebundene Verbindungen im Netzwerk, spektrale Drahtlosverbindungseffizienzen, SEs, für drahtlose Verbindungen im Netzwerk und Drahtloszugangsknotenressourcen umfassen; Erhalten eines Pufferstatus (310) der drahtgebundenen und drahtlosen Verbindungen; Reservieren (320) von Kapazität und Ressourcen für die drahtgebundenen und drahtlosen Verbindungen gemäß dem Pufferstatus; Modifizieren (330) mindestens einer der Mehrzahl von Eingaben, um die reservierte Kapazität und die reservierten Ressourcen zu berücksichtigen; Bereitstellen (340) der modifizierten Eingaben und unmodifizierter Eingaben der Mehrzahl von Eingaben für eine TE-Maschine (220), welche die modifizierten Eingaben und die unmodifizierten Eingaben gemäß einem TE-Algorithmus verarbeitet, um Verkehrsteilung an mindestens einem der Knoten, einer der drahtgebunden Verbindungen und einer der drahtlosen Verbindungen zu bestimmen.

2. Verfahren (300) nach Anspruch 1, wobei das Bereitstellen (340) aufweist: Bereitstellen (340) der modifizierten Eingaben und jeglicher unmodifizierter Eingaben der Mehrzahl von Eingaben für TE-Routing für die TE-Maschine (220), welche Routing-Pfade für Verkehr über das Netzwerk berechnet, die wenigstens einige der Knoten, der drahtgebundenen Verbindungen und der drahtlosen Verbindungen umfassen.

3. Verfahren (300) nach Anspruch 1, wobei das Modifizieren (330) aufweist: Modifizieren (330) aller der Mehrzahl von Eingaben für TE-Maschinen-Routing, um die reservierte Kapazität und Ressource zu berücksichtigen, und das Bereitstellen (340) aufweist: Bereitstellen (340) aller der modifizierten Eingaben für die TE-Maschine (220), welche alle der modifizierten Eingaben gemäß dem TE-Algorithmus verarbeitet.

4. Verfahren (300) nach einem der Ansprüche 1 bis 3, wobei die reservierte Kapazität und die reservierten Ressourcen mindestens eine von reservierten Drahtverbindungskapazitäten, reservierten Drahtloszugangsknotenressourcen und reservierten Drahtlosverbindungs-SEs umfassen.

5. Verfahren (300) nach Anspruch 4, wobei das Modifizieren mindestens einer der Mehrzahl von Eingaben mindestens eines von einem Reduzieren der Drahtverbindungskapazitäten um die reservierten Drahtverbindungskapazitäten, Reduzieren der Drahtlosverbindungs-SEs um die reservierten Drahtlosverbindungs-SEs und Reduzieren der Drahtloszugangsknotenressourcen um die reservierten Drahtloszugangsknotenressourcen aufweist.

6. Verfahren (300) nach einem der Ansprüche 1 bis 5, wobei der Pufferstatus der drahtgebundenen und drahtlosen Verbindungen eine Größe und eine Nutzung von Puffern an einer Mehrzahl von Knoten der drahtgebundenen und drahtlosen Verbindungen anzeigt.

7. Netzwerkkomponente (401) für Traffic Engineering, TE, unter Verwendung eines Verbindungspufferstatus, wobei die Netzwerkkomponente aufweist:

mindestens einen Prozessor (410); und ein nicht-transitorisches computerlesbares Speichermedium (420, 430), das Programmierung zur Ausführung durch den mindestens einen Prozessor (410) speichert, wobei die Programmierung Anweisungen umfasst, die bei Ausführung durch den mindestens einen Prozessor (410) den mindestens einen Prozessor (410) veranlassen zum:

Erhalten einer Mehrzahl von Eingaben von Knoten in einem Netzwerk, wobei die Eingaben Drahtverbindungskapazitäten für drahtgebundene Verbindungen in einem Netzwerk, spektrale Drahtlosverbindungseffizienzen, SEs, für drahtlose Verbindungen im Netzwerk und Drahtloszugangsknotenressourcen umfassen; Erhalten eines Pufferstatus der drahtgebundenen und drahtlosen Verbindungen; Reservieren von Kapazität und Ressourcen für die drahtgebundenen und drahtlosen Verbindungen gemäß dem Pufferstatus; und Modifizieren mindestens einer der Mehrzahl von Eingaben, um die reservierte Kapazität und die reservierten Ressourcen zu berücksichtigen; und

Bereitstellen der modifizierten Eingaben und unmodifizierter Eingaben der Mehrzahl von Eingaben für eine TE-Maschine (220), welche die modifizierten Eingaben und die unmodifizierten Eingaben gemäß einem TE-Algorithmus verarbeitet, um Verkehrsteilung an mindestens einem der Knoten, einer der drahtgebunden Verbindungen und einer der drahtlosen Verbindungen zu bestimmen.

8. Netzwerkkomponente (401) nach Anspruch 7, wobei die Programmierung ferner Anweisungen umfasst, die bei Ausführung durch den mindestens einen Prozessor den mindestens einen Prozessor (410) zum Bereitstellen der modifizierten Eingaben und unmodifizierter Eingaben der Mehrzahl von Eingaben für TE-Routing für die TE-Maschine (220) veranlassen, welche Routing-Pfade für Verkehr über das Netzwerk berechnet, die wenigstens einige der Knoten, der drahtgebundenen Verbindungen und der drahtlosen Verbindungen umfassen.

9. Netzwerkkomponente (401) nach Anspruch 7, wobei die Programmierung ferner Anweisungen umfasst, die bei Ausführung durch den mindestens einen Prozessor (410) den mindestens einen Prozessor (410) zum Modifizieren aller der Mehrzahl von Eingaben für TE-Maschinen-Routing, um die reservierte Kapazität und Ressource zu berücksichtigen, und Bereitstellen aller der modifizierten Eingaben für die TE-Maschine (220) veranlassen, welche alle der modifizierten Eingaben gemäß dem TE-Algorithmus verarbeitet.

10. Netzwerkkomponente (401) nach einem der Ansprüche 6 bis 9, wobei die reservierte Kapazität und die reservierten Ressourcen mindestens eine von reservierten Drahtverbindungskapazitäten, reservierten Drahtloszugangsknotenressourcen und reservierten Drahtlosverbindungs-SEs umfassen.

11. Netzwerkkomponente (401) nach Anspruch 10, wobei die Anweisungen zum Modifizieren mindestens einer der Mehrzahl von Eingaben mindestens eine von Anweisungen umfassen, die bei Ausführung durch den mindestens einen Prozessor (410) den mindestens einen Prozessor (410) zum Reduzieren der Drahtverbindungskapazitäten um die reservierten Drahtverbindungskapazitäten, Reduzieren der Drahtlosverbindungs-SEs um die reservierten Drahtlosverbindungs-SEs und Reduzieren der Drahtloszugangsknotenressourcen um die reservierten Drahtloszugangsknotenressourcen veranlassen.

12. Netzwerkkomponente (401) nach einem der Ansprüche 6 bis 11, wobei der Pufferstatus der drahtgebundenen und drahtlosen Verbindungen eine Anzahl von Bits und eine Erschöpfungszeit von Puffern an einer Mehrzahl von Knoten der drahtgebundenen und drahtlosen Verbindungen anzeigt.

**Revendications**

1. Procédé (300) exécuté par un composant de réseau pour l'ingénierie de trafic, TE, utilisant un statut de mémoire tampon de liaison, le procédé comprenant les étapes consistant à :

obtenir (310) une pluralité d'entrées de noeuds dans un réseau, dans lequel les entrées comprennent des capacités de liaisons câblées pour des liaisons câblées dans le réseau, des efficacités spectrales de liaisons sans fil, SE, pour des liaisons sans fil dans le réseau, et des ressources de noeuds d'accès sans fil ;
obtenir un statut de mémoire tampon (310) des liaisons câblées et sans fil ;
réserver (320) de la capacité et des ressources pour les liaisons câblées et sans fil selon le statut de mémoire tampon ;
modifier (330) au moins l'une de la pluralité d'entrées pour tenir compte de la capacité et des ressources réservées ;
fournir (340) les entrées modifiées et des entrées non modifiées de la pluralité d'entrées à un moteur de TE (220) qui traite les entrées modifiées et les entrées non modifiées selon un algorithme de TE pour déterminer une séparation du trafic au niveau d'au moins l'un des noeuds, des liaisons câblées et des liaisons sans fil.

2. Procédé (300) selon la revendication 1, dans lequel la fourniture (340) comprend : la fourniture (340) des entrées modifiées et d'entrées non modifiées quelconques de la pluralité d'entrées pour un routage de TE au moteur de TE (220) qui calcule des trajets de routage pour le trafic à travers le réseau comprenant au moins certains des noeuds, des liaisons câblées et des liaisons sans fil.

3. Procédé (300) selon la revendication 1, dans lequel la modification (330) comprend : la modification (330) de la totalité de la pluralité d'entrées pour le routage du moteur de TE afin de tenir compte de la capacité et des ressources réservées, et la fourniture (340) comprend : la fourniture (340) de toutes les entrées modifiées au moteur de TE (220) qui traite toutes les entrées modifiées selon l'algorithme de TE.

4. Procédé (300) selon l'une quelconque des revendications 1 à 3, dans lequel la capacité et les ressources réservées comprennent au moins l'une des capacités réservées de liaisons câblées, des ressources de noeuds d'accès sans fil réservées et des SE de liaisons sans fil réservées.

5. Procédé (300) selon la revendication 4, dans lequel la modification d'au moins l'une de la pluralité d'entrées comprend au moins l'une de la réduction des capacités de liaisons câblées par les capacités de liaisons câblées réservées, de la réduction des SE de liaisons sans fil par les SE de liaisons sans fil réservées et de la réduction des ressources de noeuds d'accès sans fil par les ressources de noeuds d'accès sans fil réservées.

**6.** Procédé (300) selon l'une quelconque des revendications 1 à 5, dans lequel le statut de mémoire tampon des liaisons câblées et sans fil indique la taille et l'utilisation des mémoires tampons au niveau d'une pluralité de noeuds des liaisons câblées et sans fil.

**7.** Composant de réseau (401) pour l'ingénierie de trafic, TE, utilisant un statut de mémoire tampon de liaison, le composant de réseau comprenant :

au moins un processeur (410) ; et
un support de stockage non transitoire (420, 430), lisible par ordinateur, stockant un programme à exécuter par 1 ; au moins un processeur (410), le programme comprenant des instructions qui, lorsqu'elles sont exécutées par l'au moins un processeur (410),
amènent l'au moins un processeur (410) à :

obtenir une pluralité d'entrées en provenance des noeuds dans un réseau, dans lequel les entrées comprennent des capacités de liaisons câblées pour des liaisons câblées dans un réseau, des efficacités spectrales de liaisons sans fil, SE, pour des liaisons sans fil dans le réseau, et des ressources de noeuds d'accès sans fil ;
obtenir un statut de mémoire tampon des liaisons câblées et sans fil ;
réserver de la capacité et des ressources pour les liaisons câblées et sans fil selon le statut de mémoire tampon ; et
modifier au moins l'une de la pluralité d'entrées pour tenir compte de la capacité et des ressources réservées ; et

fournir les entrées modifiées et des entrées non modifiées de la pluralité d'entrées à un moteur de TE (220) qui traite les entrées modifiées et les entrées non modifiées selon un algorithme de TE pour déterminer une séparation du trafic au niveau d'au moins l'un des noeuds, des liaisons câblées et des liaisons sans fil.

**8.** Composant de réseau (401) selon la revendication 7, dans lequel le programme comprend en outre des instructions qui, lorsqu'elles sont exécutées par l'au moins un processeur, amènent l'au moins un processeur (410) à fournir les entrées modifiées et des entrées non modifiées de la pluralité d'entrées pour un routage de TE au moteur de TE (220) qui calcule des trajets de routage pour le trafic à travers le réseau comprenant au moins certains des noeuds, des liaisons câblées et des liaisons sans fil.

**9.** Composant de réseau (401) selon la revendication 7, dans lequel le programme comprend en outre des instructions qui, lorsqu'elles sont exécutées par l'au moins un processeur (410), amènent l'au moins un processeur (410) à modifier l'ensemble de la pluralité d'entrées pour le routage de moteur de TE afin de tenir compte de la capacité et des ressources réservées et de fournir toutes les entrées modifiées au moteur de TE (220) qui traite toutes les entrées modifiées selon l'algorithme de TE.

**10.** Composant de réseau (401) selon l'une quelconque des revendications 6 à 9, dans lequel la capacité et les ressources réservées comprennent au moins l'une des capacités de liaisons câblées réservées, des ressources de noeuds d'accès sans fil réservées et des SE de liaisons sans fil réservées.

**11.** Composant de réseau (401) selon la revendication 10, dans lequel les instructions pour modifier au moins l'une de la pluralité d'entrées comprennent au moins l'une des instructions qui, lorsqu'elles sont exécutées par l'au moins un processeur (401), amènent l'au moins un processeur (410) à réduire les capacités de liaisons câblées par les capacités de liaisons câblées réservées, à réduire les SE de liaisons sans fil par les SE de liaisons sans fil réservées et à réduire les ressources de noeuds d'accès sans fil par les ressources de noeuds d'accès sans fil réservées.

**12.** Composant de réseau (401) selon l'une quelconque des revendications 6 à 11, dans lequel le statut de mémoire tampon des liaisons câblées et sans fil indique le nombre de bits et le temps d'épuisement des mémoires tampons au niveau d'une pluralité de noeuds des liaisons câblées et sans fil.

FIG. 1

FIG. 2

300

310

Obtain a plurality of inputs for TE routing, e.g., from the network nodes. The inputs include capacity and resource information for wired and wireless links, including wired link capacities (C), wireless link SEs (S), and wireless access node resources (R). The inputs also include the buffer status (size and usage) for both the wired and wireless links

320

Calculate reserved capacity/resource according to the buffer status of the links. The reserve capacity/resource includes at least one of reserved wired link capacities, reserved wireless access node resources, and reserved wireless link SEs

330

Modify the input capacity and resource information to account for the calculated reserved capacity/resource

340

Provide the modified inputs and any unmodified inputs to a TE algorithm to calculate routing paths for traffic across the nodes and the wired and wireless links

FIG. 3

400

401

410

CPU

420

MEMORY

430

MASS
STORAGE

NETWORK

NETWORK
INTERFACE

I/O
INTERFACE

450

480

460

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060159084 A